# EUROPEAN PATENT APPLICATION

(11) **EP 2 894 578 A1**
(43) Date of publication of application: **15.07.2015**
(21) Application number: 14305046.6
(22) Date of filing: 13.01.2014
(51) Int. Cl.: G06F 17/30

(54) **Method and apparatus for handling data in a storage system**

(71) Applicant: Thomson Licensing, 92130 Issy-les-Moulineaux (FR)
(72) Inventor: Arrighetti, Walter, 00156 Roma (IT)
(74) Representative: Schmidt-Uhlig, Thomas

(57) **Abstract**

A method for handling data in a storage system (25) and an apparatus (20) configured to perform the method are described. In particular, in order to store data in the storage system (25), the data being provided as a set of files, a file distributor (22) distributes (11) the files over two or more file systems. Each file system has a data path. A file system generator (23) generates (12) a virtual file system comprising pointers to the distributed files within the two or more file systems. For reading data from the storage system (25), a file system retrieving unit (26) retrieves (13) the virtual file system. A data interface (24) then reads (14) a set of files from the two or more file systems based on the virtual file system using two or more I/O threads.

## Description

### FIELD OF THE INVENTION

The invention relates to a method and an apparatus for handling data in a storage system, and more specifically to a method and an apparatus for handling data that are provided as a set of files distributed over two or more file systems.

### BACKGROUND OF THE INVENTION

In high-profile post-production for digital intermediates and digital cinema, high-resolution uncompressed video footage is handled. High resolution here means frames with at least 10 bits per color channel per pixel, thus a minimum of 32 bits per pixel (including padding bits), and a resolution which is at least 'HD' (1920 pixels per row), but is usually '2K' (2048 pixels per row), '4K' (4096 pixels per row), or even more.

In addition, a throughput equivalent to at least 24 frames per second is needed for real-time record and playback capabilities, which is mandatory in certain creative passages as well as in theatrical shows. This means that any storage system which is real-time capable must be carefully engineered to guarantee those minimum requirements. For example, typical monoscopic theatrical 2K playback requires 305MB/s minimum throughput all over. Stereoscopic frames, with 12 bits rather than 10 bits per color channel, results in a minimum throughput of 765MB/s. Monoscopic theatrical 4K playback goes as up as 1.22GB/s, and so on.

Uncompressed video footage, but also video that is compressed using intra-frame compression schemes only, is traditionally stored as frame sequences, particularly during the post-production and finishing phases. This means that each subsequent frame of a time-continuous video clip is stored as a single file; thus the term "frame-per-file" sequence. A finished 'movie' may originate from a final cut of several such clips. Maximizing the I/O performance when reading and writing video clips based on frame-per-file sequences is crucial for playing back and recording high-resolution, uncompressed video. The I/O performance is currently limited by hardware I/O throughput of the underlying storage device, e.g. the theoretical maximum of 30MB/s for USB 2.0 Direct-Attached Storage, as well as by file-allocation strategies of the file system and subsequent internal file fragmentation.

### SUMMARY OF THE INVENTION

It is an object of the present invention to propose an improved solution for handling data in a storage system, the data being provided as a set of files.

According to one aspect of the invention, a method for storing data in a storage system, wherein the data are provided as a set of files, comprises the steps of:
- distributing the files over two or more file systems, each file system having a data path; and
- generating a virtual file system comprising pointers to the distributed files within the two or more file systems.

Accordingly, an apparatus configured to store data in a storage system, wherein the data are provided as a set of files, comprises:
- a file distributor configured to distribute the files over two or more file systems, each file system having a data path; and
- a file system generator configured to generate a virtual file system comprising pointers to the distributed files within the two or more file systems.

Also, a computer readable storage medium has stored therein instructions enabling storing data in a storage system, wherein the data are provided as a set of files, which when executed by a computer, cause the computer to:
- distribute the files over two or more file systems, each file system having a data path; and
- generate a virtual file system comprising pointers to the distributed files within the two or more file systems.

According to another aspect of the invention, a method for reading data from a storage system, wherein the data are provided as a set of files distributed over two or more file systems, each file system having a data path, comprises the steps of:
- retrieving a virtual file system comprising pointers to the distributed files within the two or more file systems; and
- reading a set of files from the two or more file systems based on the virtual file system using two or more I/O threads.

Accordingly, an apparatus configured to read data from a storage system, wherein the data are provided as a set of files distributed over two or more file systems, each file system having a data path, comprises:
- a file system retrieving unit configured to retrieve a virtual file system comprising pointers to the distributed files within the two or more file systems; and
- a data interface (configured to read a set of files from the two or more file systems based on the virtual file system using two or more I/O threads.

Similarly, a computer readable storage medium has stored therein instructions enabling reading data from a storage system, wherein the data are provided as a set of files distributed over two or more file systems, each file system having a data path, which when executed by a computer, cause the computer to:
- retrieve a virtual file system comprising pointers to the distributed files within the two or more file systems; and
- read a set of files from the two or more file systems based on the virtual file system using two or more I/O threads.

According to the invention a virtualized file system layer is created, enforced by either script, daemon and/or Multipath I/O driver, where each file appears in a set of files, e.g. a file sequence. The files are scattered on several file systems, each with its own separate data path. Reading and writing a set of files, e.g. a chronological sequence of files, is thus accomplished by several I/O threads, usually by different data channels. This maximizes the effective overall I/O throughput. Only the availability and I/O-independence of those paths is required.

The proposed solution provides a cost-effective alternative to storage systems that support multipath I/O at global architecture, hardware and/or operating system level, e.g. Storage Area Networks. This is especially advantageous when just high-performance throughput is paramount, while other higher-level features, like shared access or high availability, are not necessary.

Advantageously, a folder created in the virtual file system or moved within the virtual file system is identically created in the two or more file systems or moved within the two or more file systems. This ensures that all file systems replicate the same folder hierarchy.

Preferably, the distribution of the files over the two or more file systems is based on at least one of file size, file date, metadata associated to the files, or modulo divisions on a file index in the set of files. All these properties are well suited for distributing the files as required.

Preferably, when a file comprising a multi-digit sequence in the file name is to be stored in the storage system, matching files already stored in the storage system and belonging to the same set of files are searched for. A storage location for the file to be stored is then determined in dependence of whether or not matching files are found in the storage system. Using such multi-digit sequences in the file name, which are often encountered in professional environments, the various files of the file set can reliably be distributed to the various file systems.

In principle, the proposed solution is applicable to any set of files. It is especially advantageous when the files have roughly the same size and need to be accessed as fast as possible. For example, the set of files may be a frame-per-file sequence of video frames, e.g. a video clip. Of course, the video frames may likewise be stereoscopic or multiview video frames. In this case the video frames for different views are preferably stored in respective different file systems.

Despite originating from technical problem encountered in high-profile post-production facilities, the proposed solution is not limited to such applications. With the advent of ultrahigh-resolution (UHD) consumer devices, throughput requirements are steeply ramping up, even for the non-professional storage market. For this reason the described approach is immediately applicable to file system management of consumer media systems, including embedded ones like SmartTVs, set-top boxes, video servers or smartphones/tablets capable of high-resolution video streaming on either Direct-Attached Storage or on network and cloud storage.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: schematically illustrates a method according to the invention for handling data in a storage system; and
- Fig. 2: schematically illustrates an apparatus configured to perform a method according to the invention.

### DETAILED DESCRIPTION OF PREFERED EMBODIMENTS

In the following the invention shall be explained with reference to video frames provided as a frame-per-file sequence. Of course, the proposed solution is applicable to any data provided as a set of files.

As already indicated before, in high-profile post-production for digital intermediates and digital cinema, high-resolution uncompressed video footage is handled. This video footage is traditionally stored as frame sequences, i.e. each subsequent frame of a time-continuous video clip is stored as a single file. Maximizing the I/O performance when reading and writing video clips based on frame-per-file sequences is crucial.

All the files belonging to the same logical clip typically share the file system metadata shown below:
- file path (i.e. the files reside in the same folder, e.g. /path/to/clip);
- base filename (e.g. basename-);
- file extension (which logically mandates the file-type encoding the frame, e.g. .dpx).

For example, a video clip consisting of 2000 frames may be stored as the following file sequence:
- /path/to/clip/basename-289368.dpx;
- /path/to/clip/basename-289369.dpx;
- /path/to/clip/basename-289370.dpx;
- .........
- /path/to/clip/basename-300367.dpx.

Stereoscopic clips are typically represented on file systems using either two separate frame sequences 'L' and 'R', i.e. one for the left eye and one for the right eye, or one interleaved frame progression, where each R-frame immediately follows its synchronous L-frame in the file sequence numbering order.

During real-time operations, i.e. video playback or recording, the access time is tied to the single-I/O- or multi-I/O-threaded capabilities of the volume tied to the specific file system.

Furthermore, most file systems and storage managers on operating system level, particularly if embedded in mobile or non-professional equipment, do not take into account such high-level file system hierarchies when doing the initial allocation of blocks on the data volume representing the file systems. Exceptions are specifically built storage systems, like those used in media-aware Storage Area Networks and Content Delivery Networks. In all other cases, little to none pre-allocation strategies are employed. Therefore, locality of reference is lost across the same frame-per-file sequence, which poses additional threats to the related I/O throughput.

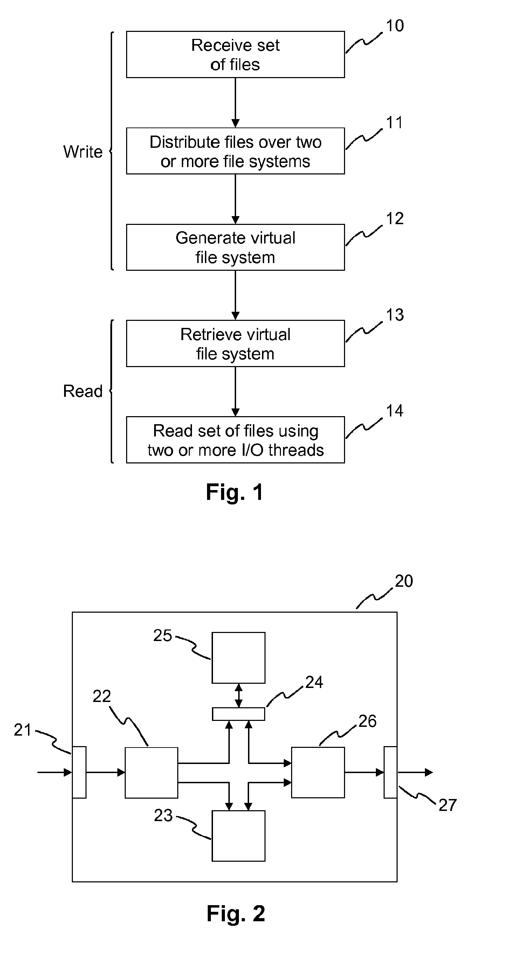

A method according to the invention for handling data provided as a set of files in a storage system is schematically illustrated in in Fig. 1. For storing the data in a storage system, a set of files is received 10. The files are then distributed 11 over two or more file systems, where each file system has a data path. In order to be able to access the distributed files, a virtual file system is generated 12, which comprises pointers to the distributed files within the two or more file systems. For reading data from the storage system the virtual file system is retrieved 13. A set of files is then read 14 from the two or more file systems based on the virtual file system using two or more I/O threads.

An apparatus 20 configured to implement the method is schematically depicted in Fig. 2. The apparatus 20 comprises an input 21 for receiving data provided as a set of files and a storage system 25 for storing the data. For storing data, a file distributor 22 distributes 11 the files over two or more file systems belonging to the storage system 25 using a data interface 24. Each file system has a data path. A file system generator 23 generates 12 a virtual file system comprising pointers to the distributed files within the two or more file systems. For reading data, a file system retrieving unit 26 retrieves 13 the virtual file system. The data interface 24 then reads 14 a set of files from the two or more file systems based on the virtual file system using two or more I/O threads. The retrieved data are made available at an output 27. Of course, the different units 22, 23, 26 may likewise be fully or partially combined into a single unit or implemented as software running on a processor. In addition, the input 21 and the output 27 may likewise be combined or partially combined into a single bi-directional interface.

The proposed solution has a considerably increased performance. The approach presumes *N* > 1 different storage volumes, each with its own file system structure on top, and each with its own pre-defined data path. At operating system level, a data path here means a block-level handler, like for example /dev/*/sdxk files in Linux, or a similar UNC path \\.\67a578c67def... in Windows. Different Physical paths for each data path, e.g. different buses, SCSI hosts, iSCSI targets, or even different network volumes, may be a plus or a drawback, depending on the specific implementation and on the rest of the infrastructure.

An (*N* + 1)th file system is also used, which is not necessarily tied to a real-time-capable, otherwise I/O performing storage system. This file system is the only exposed file system at virtual level, although the device or application actually performing the I/O must physically access all the other *N* data paths, i.e. silently mount them in its own file system.

For the sake of clarity, let a Linux- or Android-based operating system be considered and /dev/block/lun1, /dev/block/lun2, ..., and /dev/block/lunN be the *N* volumes mounted over points /mnt/dp1, /mnt/dp2, ..., and /mnt/dpN, respectively. Let the above mentioned (*N* + 1)th file system be considered to be locally rooted in /media/store. User-applications should not have direct visibility of the mount points /mnt/dp***k*** (1<=**k**<=*N*), but still be able to resolve I/O request at file system level as assigned to folder /media/store. This folder should only contain frame sequences.

A script or demon program running on the system takes care of file creation and other POSIX-like requests on either the whole /media/store folder or on selected sub-folders of this folder, including the following rules:
- Any folder created or moved within /media/store is in the same way created or moved within any of the file systems /mnt/dp***k*** as well. Consequently, all of them replicate the same folder hierarchy.
- When a file whose name ends with a multi-digit sequence, e.g. representing integer number ***m**,* is created in or written to a path, other files belonging to the same sequence, i.e. to the same video clip, are searched for:
   ○ If no matching file sequence is found, this is considered to be the first file and it is actually created on /mnt/dp***t***, where ***t*** = 1.
   ○ If a matching sequence is found in the storage system (with first frame ***t***o) the ***m***th file is actually created in /mnt/dp***t***, where ***t*** = (***m***-***t***₀)%*N*.
   o A soft-link for that very file is created pointing from /media/store, under the homologous folder, to the right path under the mount-point /mnt/dp***t***.

For example, if *N* = 3 and the usual 1000 files need be created under /media/store/clip1/, they would all be soft-linked as follows:
/media/store/clip1/frm.289368.exr -> /mnt/dp1/clip1/frm.289368.exr
/media/store/clip1/frm.289369.exr -> /mnt/dp2/clip1/frm.289369.exr
/media/store/clip1/frm.289370.exr -> /mnt/dp3/clip1/frm.289370.exr
/media/store/clip1/frm.289371.exr -> /mnt/dp1/clip1/frm.289371.exr
/media/store/clip1/frm.289372.exr -> /mnt/dp2/clip1/frm.289372.exr
/media/store/clip1/frm.289373.exr -> /mnt/dp3/clip1/frm.289373.exr
/media/store/clip1/frm.289374.exr -> /mnt/dp1/clip1/frm.289374.exr
.........
/media/store/clip1/frm.300366.exr -> /mnt/dp3/clip1/frm.300366.exr
/media/store/clip1/frm.300367.exr -> /mnt/dp1/clip1/frm.300367.exr

During both sequential write and read operations on the virtual file sequence shown on the left in the above list, the storage allocation scheme becomes less important as the file access times. When an application accesses the video using *N* different threads, it actually uses all *N* independent data paths at the same time. This increases the transfer speed, as it is a real parallel I/O, using a scheme similar to Multipath I/O, but at a far higher model level. At the same time implementation of this scheme is less expensive, as it does not require dedicated hardware or firmware. Furthermore, file access times and internal file fragmentation are also less relevant to sequential data reads, as sequential operations on the same local file system occur only once per every *N* files.

For stereoscopic file sequences two different possible implementations are described in the following, where two different frame-per-file sequences are accessed, one for left-eye, or L-frames, and one for right-eye, or R-frames.

If there are *N=*2 independent file systems, each capable of satisfying I/O requirements for a single monoscopic clip with the same specifications, their block-level devices /dev/block/lun1 and /dev/block/lun2 are mounted on /mnt/Lstor and /mnt/Rstor, respectively. In this case the implementation described above is used. However, the background file-managing script takes care of the stereoscopic clips in a slightly different manner:
/media/store/clip/frm-L_00000.tif -> /mnt/Lstor/clip/frm_0000.tif
/media/store/clip/frm-R_00000.tif -> /mnt/Rstor/clip/frm_0000.tif
/media/store/clip/frm-L_00001.tif -> /mnt/Lstor/clip/frm_0001.tif
/media/store/clip/frm-R_00001.tif -> /mnt/Rstor/clip/frm_0001.tif
/media/store/clip/frm-L_00002.tif -> /mnt/Lstor/clip/frm_0002.tif
/media/store/clip/frm-R_00002.tif -> /mnt/Rstor/clip/frm_0002.tif
.........
/media/store/clip/frm-L_00999.tif -> /mnt/Lstor/clip/frm_0999.tif
/media/store/clip/frm-L_00999.tif -> /mnt/Rstor/clip/frm_0999.tif

Otherwise, the two above approaches can be combined, i.e. a two-level striping using *N* > 2 storage pools, where L- and R-frames are interleaved with each other on consecutive lower level file systems. In both cases, the capability to have at least two I/O threads in the application allows for a simultaneous I/O handling of the two simultaneous eye-frames. Of course, this approach can easily be extended to multiview clips. For each view a dedicated file system is used, i.e. video frames for different views are stored in respective different file systems.

In the above examples the files are distributed based on their file names. Of course, this is not the only possibility to distribute the files. The distribution may likewise be based on other attributes, e.g. file size, file type or metadata available for the files. For example, larger files may be stored in physical file systems that have more (free) space. Accordingly, smaller files may be stored on smaller or fuller file systems. Similarly, files that are of multimedia type, e.g. video files associated to high bit rates, may be stored on file systems whose data paths have a higher bandwidth in order to speed up the file transfer process, as well as the later playback operations. Files associated to lower bit rates may accordingly be stored on file systems with a lower bandwidth.

## Claims

1. A method for storing data in a storage system (25), wherein the data are provided as a set of files, the method **comprising** the steps of:
- distributing (11) the files over two or more file systems, each file system having a data path; and
- generating (12) a virtual file system comprising pointers to the distributed files within the two or more file systems.

2. The method according to claim 1, **wherein** a folder created in the virtual file system or moved within the virtual file system is identically created in the two or more file systems or moved within the two or more file systems.

3. The method according to claim 1 or 2, **wherein** distribution of the files over the two or more file systems is based on at least one of file size, file date, metadata associated to the files, or modulo divisions on a file index in the set of files.

4. The method according to claim 3, **wherein** when a file comprising a multi-digit sequence in the file name is to be stored in the storage system, matching files already stored in the storage system and belonging to the same set of files are searched for.

5. The method according to claim 4, **wherein** a storage location for the file to be stored is determined in dependence of whether or not matching files are found in the storage system.

6. The method according to any of the preceding claims, **wherein** the set of files is a frame-per-file sequence of video frames.

7. The method according to claim 5, **wherein** the video frames are stereoscopic or multiview video frames.

8. The method according to claim 7, **wherein** video frames for different views are stored in respective different file systems.

9. An apparatus (20) configured to store data in a storage system (25), wherein the data are provided as a set of files, the apparatus (20) **comprising:**
- a file distributor (22) configured to distribute (11) the files over two or more file systems, each file system having a data path; and
- a file system generator (23) configured to generate (12) a virtual file system comprising pointers to the distributed files within the two or more file systems.

10. A computer readable storage medium having stored therein instructions enabling storing data in a storage system (25), wherein the data are provided as a set of files, which when executed by a computer, cause the computer to:
- distribute (11) the files over two or more file systems, each file system having a data path; and
- generate (12) a virtual file system comprising pointers to the distributed files within the two or more file systems.

11. A method for reading data from a storage system (25),
wherein the data are provided as a set of files distributed over two or more file systems, each file system having a data path, the method **comprising** the steps of:
- retrieving (13) a virtual file system comprising pointers to the distributed files within the two or more file systems; and
- reading (14) a set of files from the two or more file systems based on the virtual file system using two or more I/O threads.

12. An apparatus (20) configured to read data from a storage system (25), wherein the data are provided as a set of files distributed over two or more file systems, each file system having a data path, the apparatus **comprising:**
- a file system retrieving unit (26) configured to retrieve (13) a virtual file system comprising pointers to the distributed files within the two or more file systems; and
- a data interface (24) configured to read (14) a set of files from the two or more file systems based on the virtual file system using two or more I/O threads.

13. A computer readable storage medium having stored therein instructions enabling reading data from a storage system (25), wherein the data are provided as a set of files distributed over two or more file systems, each file system having a data path, which when executed by a computer, cause the computer to:
- retrieve (13) a virtual file system comprising pointers to the distributed files within the two or more file systems; and
- read (14) a set of files from the two or more file systems based on the virtual file system using two or more I/O threads.
